# EUROPÄISCHE PATENTANMELDUNG

(11) **EP 4 428 639 A1**
(43) Veröffentlichungstag der Anmeldung: **11.09.2024**
(21) Anmeldenummer: 23160512.2
(22) Anmeldetag: 07.03.2023
(51) Int. Cl.: G05B 19/042

(54) **PERIPHERIEMODUL FÜR EIN AUTOMATISIERUNGSGERÄT**

(71) Anmelder: Siemens Aktiengesellschaft, 80333 München (DE)
(72) Erfinder: Griessbach, Gunter, 09423 Gelenau (DE)
(74) Vertreter: Siemens Patent Attorneys

(57) **Zusammenfassung**

Die Erfindung betrifft ein Peripheriemodul (10) für ein Automatisierungsgerät (30) mit einer Mehrzahl von Eingangskanälen (E1,...,E4) und/oder Ausgangskanälen (A1,...,A4), wobei jedem Eingangskanal (E1,...,E4) ein Signaleingang (SE1,...,SE4) und jedem Ausgangskanal (A1,...,A4) ein Signalausgang (SA1,...,SA4) zugeordnet ist, wobei ein jeweiliger Signaleingang (SE1,...,SE4) mit seinem Eingangskanal (E1,...,E4) zum Anschluss von Sensoren und ein jeweiliger Signalausgang (SA1,...,SA4) mit seinem Ausgangskanal (A1,...,A4 zum Anschluss von Aktoren ausgestaltet ist, wobei den Eingangskanälen (E1,...,E4) eine Auswerteeinheit (AE) und den Ausgangskanälen (A1,...,A4) eine Gebereinheit (GE) zugeordnet ist, wobei aufgrund von Stromfluss in einem aktivierten Eingangskanal (E1,...,E4) bzw. in einem aktivierten Ausgangskanal (A1,...,A4) jeweils eine Kanalverlustleistung (PEi,PAi) auftritt, wobei einen Speicherbereich (11) in dem eine maximale Anzahl (N) von aktivierbaren Eingangskanälen (E1,...,E4) und/oder Ausgangskanälen (A1,...,A4) abgelegt ist, wobei die maximale Anzahl (N) derart vorgegeben ist, damit im Betrieb eine zulässige Gesamt-Verlustleistung (Pgv) einer Summe der maximal gleichzeitig auftretenden einzelnen Kanalverlustleistungen (PEi,PAi) nicht überschritten wird, eine Überwachungseinheit (UE), welche ausgestaltet ist das die maximale Anzahl (N) von aktivierbaren Eingangskanälen (E1,...,E4) und/oder Ausgangskanälen (A1,...,A4) nicht überschritten wird.

## Beschreibung

Die Erfindung betrifft ein Peripheriemodul für ein Automatisierungsgerät mit einer Mehrzahl von Eingangskanälen und/oder Ausgangskanälen, wobei jedem Eingangskanal ein Signaleingang und jedem Ausgangskanal ein Signalausgang zugeordnet ist, wobei ein jeweiliger Signaleingang mit seinem Eingangskanal zum Anschluss von Sensoren und ein jeweiliger Signalausgang mit seinem Ausgangskanal zum Anschluss von Aktoren ausgestaltet ist, wobei den Eingangskanälen eine Auswerteeinheit und den Ausgangskanälen eine Gebereinheit zugeordnet ist, wobei aufgrund von Stromfluss in einem aktivierten Eingangskanal bzw. in einem aktivierten Ausgangskanal jeweils eine Kanalverlustleistung auftritt.

Die europäische Patentschrift EP 1 770 457 B1 offenbart ebenfalls eine Peripheriebaugruppe für ein Automatisierungsgerät.

Der Begriff Peripheriemodul wird im Folgenden entweder für eine einzelne Baugruppe oder für das einzelne Modul, jeweils mit Anschlussmöglichkeit für eine externe Peripherie, wie z.B. Schalter, Grenzwertmelder ,elektrische, hydraulische oder pneumatische Aggregate und dergleichen, insbesondere im Falle von sogenannten Kompaktautomatisierungsgeräten, also Geräten bei denen die Steuerungs- und Verarbeitungsfunktionalität und die Möglichkeit zum Peripherieanschluss in einem Gerät kombiniert sind, für das gesamte Automatisierungsgerät verwendet.

Automatisierungsgeräte der eingangs genannten Art, insbesondere in einer Ausführungsform als modulare Automatisierungsgeräte sind allgemein bekannt, z.B. in Form der Automatisierungsgeräte, die von der Anmelderin unter der Marke SIMATIC angeboten werden. Aus diesen Automatisierungsgeräten sind auch als Einzelmodule (Einzelbaugruppe) ausgeführte Peripheriebaugruppen, insbesondere Eingabebaugruppen oder kombinierte Ein-/Ausgabebaugruppen als konkretes Beispiel für ein Peripheriemodul bekannt.

Peripheriemodule können beispielsweise mindestens einen als Digitaleingang fungierenden Signalkontakt aufweisen, bei einem solchen Peripheriemodul handelt es sich entsprechend um eine Peripheriebaugruppe mit einer Digitaleingabefunktionalität. Solche Baugruppen werden häufig mit einer Mehrzahl, z.B. 16 oder 32, von Digitaleingängen ausgeführt und entsprechend als Digitaleingabebaugruppe bezeichnet. Die Digitaleingabebaugruppe ist also eine Sonderform einer Peripheriebaugruppe mit ausschließlich digitaler Eingabefunktionalität. Daneben können auch Mischformen, also z.B. Digitalein-/ausgabebaugruppen oder Digitaleingabe- und Analogeingabebaugruppen mindestens einen als Digitaleingang fungierenden Signalkontakt aufweisen.

Die im Stand der Technik bekannten Eingabebaugruppen basieren auf dem Prinzip, dass über einen Digitaleingang, also den mit dem Signalkontakt verknüpften Eingangskanal, bei aktiviertem angeschlossenem Sensor, ein Strom in die Baugruppe fließt. Im einfachsten Fall wird bei vorhandenem Stromfluss der Sensor als aktiviert erkannt. Entsprechend wird bei nicht vorhandenen Stromfluss der Sensor als deaktiviert erkannt. Es kann jedoch auch bei deaktiviertem Sensor ein Strom in die Baugruppe fließen so das üblicherweise der Status des Sensors an der Höhe einer Spannung, vorzugsweise anhand des Überschreitens bestimmter vorgegebener und vorgebbarer Schwellwerte für die Spannung, die zum Treiben eines Stroms über den Signalkontakt erforderlich ist, erkannt wird.

Bei dem Stromfluss in der Baugruppe entsteht eine Verlustleistung innerhalb der Baugruppe. Die Verlustleistung, welche wiederum Wärme erzeugt, muss aus der Baugruppe abgeführt werden, welches üblicherweise durch eine bestimmte Aufbauform der Baugruppe realisiert wird. Da die theoretisch erforderlichen Baugrößen dem Trend zur Minimalisierung widersprechen, muss eine Lösung für weniger Verlustleistung gefunden werden.

Die Aufgabe der Erfindung liegt entsprechend darin, eine baugruppenseitige bzw. eine in den Peripheriemodul entstehende Verlustleistung innerhalb gewisser Grenzen zu halten.

Für das eingangs genannte Peripheriemodul wird die Aufgabe dadurch gelöst, dass das Peripheriemodul einen Speicherbereich aufweist in dem eine maximale Anzahl von aktivierbaren Eingangskanälen und/oder Ausgangskanälen abgelegt ist. Wobei die maximale Anzahl derart vorgegeben ist, damit im Betrieb eine zulässige Gesamt-Verlustleistung einer Summe der maximal gleichzeitig auftretenden einzelnen Kanalverlustleistungen nicht überschritten wird, weiterhin ist eine Überwachungseinheit vorhanden, welche ausgestaltet ist, dass die maximale Anzahl von aktivierbaren Eingangskanälen und/oder Ausgangskanälen nicht überschritten wird.

In einer weiter optimierten Ausgestaltung des Peripheriemoduls ist in dem Speicherbereich zusätzlich zu oder anstelle der maximalen Anzahl eine Strombelastbarkeitskurve abgelegt, welche die zulässige Gesamt-Verlustleistung als Funktion einer Temperatur wiedergibt, die Überwachungseinheit ist weiterhin ausgestaltet, die Summe der einzelnen Kanalverlustleistungen mit der Strombelastbarkeitskurve zu vergleichen und die zur Verfügung stehenden Eingangskanäle und/oder Ausgangskanäle dahingehend zu steuern, dass bei Überschreitung der Strombelastbarkeitskurve ein aktivierter Eingangskanal und/oder Ausgangskanal deaktiviert wird und bei einem vorgebbaren Unterschreitungsmaß ein deaktivierter Eingangskanal und/oder Ausgangskanal aktiviert wird.

Eine Strombelastungskurve oder auch eine Derating-Kurve beschreibt die maximal zulässige Verlustleistung eines elektrischen oder elektronischen Bauteils in Abhängigkeit von seiner Umgebungstemperatur. Demnach zeigt die Derarting-Kurve, welche Ströme gleichzeitig über sämtliche Verbindungen innerhalb der Baugruppe fließen dürfen, wenn das Bauelement oder die Bauelemente in dem Peripheriemodul verschiedenen Umgebungstemperaturen unterhalb ihrer oberen Grenztemperatur ausgesetzt werden. Eine Strombelastbarkeit ist somit kein konstanter Wert, sondern sinkt mit steigender Umgebungstemperatur eines Bauteils oder einer ganzen Baugruppe. Außerdem wird die Strombelastbarkeit durch eine Baugröße eines Peripheriemoduls bzw. dessen Entwärmungskonzept bestimmt.

Der Erfinder hat erkannt, dass ein Anwender der Automatisierungsbaugruppen bzw. Peripheriemodule auf die Auslastung der Kanalanzahl keine Rücksicht mehr nehmen muss, weil das erfindungsgemäße Peripheriemodul selbst nun die Anzahl der aktivierbaren Kanäle überwacht und nur die maximal vorgesehene Anzahl von Kanälen aktiviert. Ändert sich an einen dieser Kanäle ein Zustand in deaktiviert, so kann automatisch ein anderer Kanal aktiviert werden, der sich bereits z.B. in einer Wartestellung befunden hat.

Dementsprechend wird das Peripheriemodul weitergebildet durch eine Warteschlange, in welcher Kanalaktivierungsaufträge hinterlegt sind und die Überwachungseinheit weiterhin ausgestaltet ist, die sich in der Warteschlange befindenden Kanalaktivierungsaufträge abzuarbeiten und wenn es die aktuell herrschende Summe der einzelnen Kanalverlustleistungen zulässt entsprechend den Kanalaktivierungsauftrag den jeweiligen Eingangskanal und/oder Ausgangskanal zu aktivieren.

Vorteilhaft ist es weiterhin, wenn das Peripheriemodul eine Schnittstelle aufweist, über die die maximale Anzahl parametrierbar ist. Damit kann das Derating (Anzahl der gleichzeitig aktivierbaren Kanäle) für das Modul konfigurierbar und parametrierbar gemacht werden. Damit kann man sich dynamisch an unterschiedliche Einsatzbedingungen anpassen.

In einer weiteren Ausgestaltung des Peripheriemoduls wird vorgesehen, eine Prioritätsliste zu hinterlegen, in welcher bestimmten Eingangskanälen bzw. bestimmten Ausgangskanälen eine Vorrangs-Kennziffer zugeordnet ist und die Überwachungseinheit ist weiterhin ausgestaltet deaktivierte Eingangskanäle und/oder Ausgangskanäle gemäß ihrer Vorrangskennziffer mit Vorrang zu aktivieren.

Beispielsweise könnten Eingangskanäle, an welchem nur eine Temperaturmessung von einem großen Wasser-Tank angeschlossen ist, eine sehr niedrige Priorität bekommen, weil eine Temperatur einer großen Wassermenge sich nicht schnell ändern kann. Damit wäre es von Vorteil, wenn dieser Eingangskanal beispielsweise nur ein Messwert in einer Stunde aufnehmen würde. Was durch eine sehr hohe Priorität bzw. eine sehr hohe Vorrangskennziffer ausgedrückt werden würde.

Ein Derating in einen Peripheriemodul wird weiter optimiert, wenn das Peripheriemodul eine Temperaturmesseinheit aufweist, welche einen Temperaturwert zur Verfügung stellt, wobei die Überwachungseinheit ausgestaltet ist, in Abhängigkeit von den Temperaturwert die maximale Anzahl von aktivierbaren Eingangskanälen und/oder Ausgangskanälen entsprechend anzupassen.

Das Peripheriemodul ist demzufolge in der Lage das Derating selbständig anzupassen bzw. zu verändern.

Zweckmäßigerweise setzt das Modul eine Diagnosemeldung für den Fall ab, wenn die durch ein Anwenderprogramm zu aktivierende Kanalzahl höher ist als die gemäß den vorgesehenen Derating zulässig ist. Dazu weist das Peripheriemodul eine Diagnoseeinheit auf, welche mit der Überwachungseinheit zusammenarbeitet, und ausgestaltet ist eine Diagnosemeldung abzusetzen, wenn Aktivierungsanfragen für Eingangskanäle und/oder Ausgangskanäle eines auf das Peripheriemodul zugreifenden Steuerungsprogramm die maximale Anzahl von aktivierbaren Eingangskanälen und/oder Ausgangskanälen überschreiten.

Die Zeichnung zeigt ein Ausführungsbeispiel der Erfindung. Dabei zeigt
- FIG 1: ein Peripheriemodul,
- FIG 2: eine Strombelastbarkeitskurve,
- FIG 3: eine Warteschlange und
- FIG 4: eine Prioritätsliste.

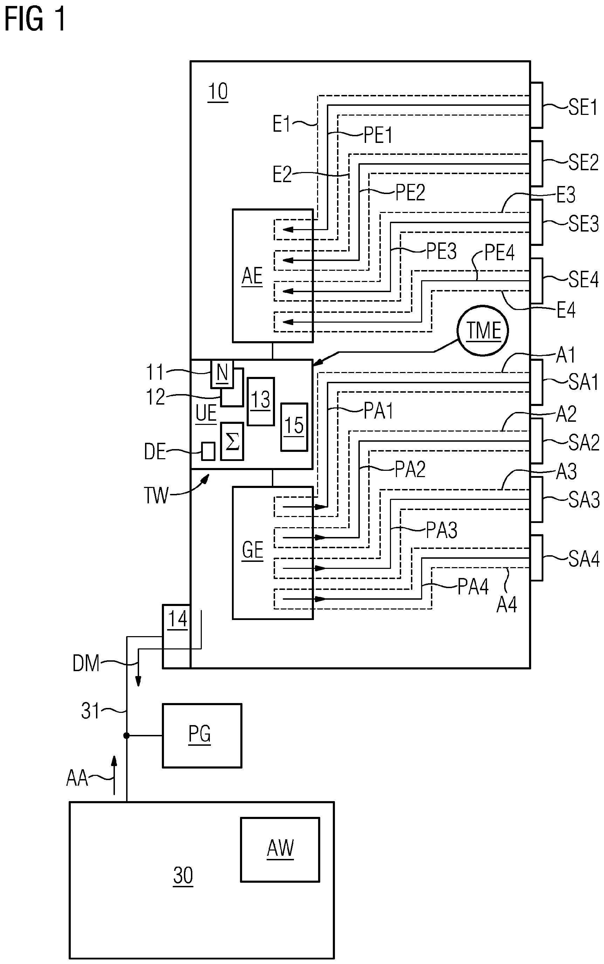

Gemäß FIG 1 ist ein Peripheriemodul 10 für ein Automatisierungsgerät 30 dargestellt. Das Peripheriemodul 10 weist einen ersten Signaleingang SE1, einen zweiten Signaleingang SE2, einen dritten Signaleingang SE3 und einen vierten Signaleingang SE4 auf. Die Signaleingänge SE1,...,SE4 sind mit einer Auswerteeinheit AE verbunden. Jedem Signaleingang SE1,...,SE4 ist ein Eingangskanal E1,...,E4 zugeordnet. Die Signaleingänge SE1,...,SE4 sind ausgestaltet zum Anschluss von Sensoren und die Auswerteeinheit AE ist ausgestaltet die angeschlossenen Sensoren bzw. die Sensorsignale auszuwerten. Als Eingangskanal E1,...,E4 wird die gesamte Strecke zwischen Signaleingang SE1 und einer Auswerteelektronik in der Auswerteeinheit AE bezeichnet.

Gemäß FIG 1 sind somit vier Eingangskanäle E1,E2,E3,E4 gestrichelt dargestellt. Jeder dieser Eingangskanäle E1,...,E4 ruft aufgrund von Stromfluss in einem aktivierten Eingangskanal E1,...,E4 eine Kanalverlustleistung PE1,PE2,PE3,PE4 hervor. Diese Verlustleistung PE1,...,PE4 lässt die Temperatur im Inneren des Peripheriemoduls 10 ansteigen.

Weiterhin weist das Peripheriemodul 10 einen ersten Signalausgang SA1, einen zweiten Signalausgang SA2, einen dritten Signalausgang SA3 und einen vierten Signalausgang SA4 zum Anschluss von Aktoren auf. Die Signalausgänge SA1,...,SA4 sind jeweils mit einer Gebereinheit GE verbunden, welche für die Ausgänge die entsprechenden Signale bereitstellt. Analog zu den Eingangskanälen E1,...,E4 sind jetzt Ausgangskanäle A1,...,A4 vorhanden. Bei einem aktivierten Ausgangskanal A1,...,A4 tritt auch hier aufgrund von Stromfluss eine Kanalverlustleistung PA1,PA2,PA3,PA4 auf, welches wiederum zur Erwärmung des Peripheriemoduls 10 führt. Das Peripheriemodul 10 ist über eine Schnittstelle 14 mittels eines Feldbusses 31 mit einem Automatisierungsgerät 30 verbunden. In dem Automatisierungsgerät 30 läuft ein Steuerprogramm AW ab, welches die Eingänge abfragt bzw. den Ausgängen Signale schickt.

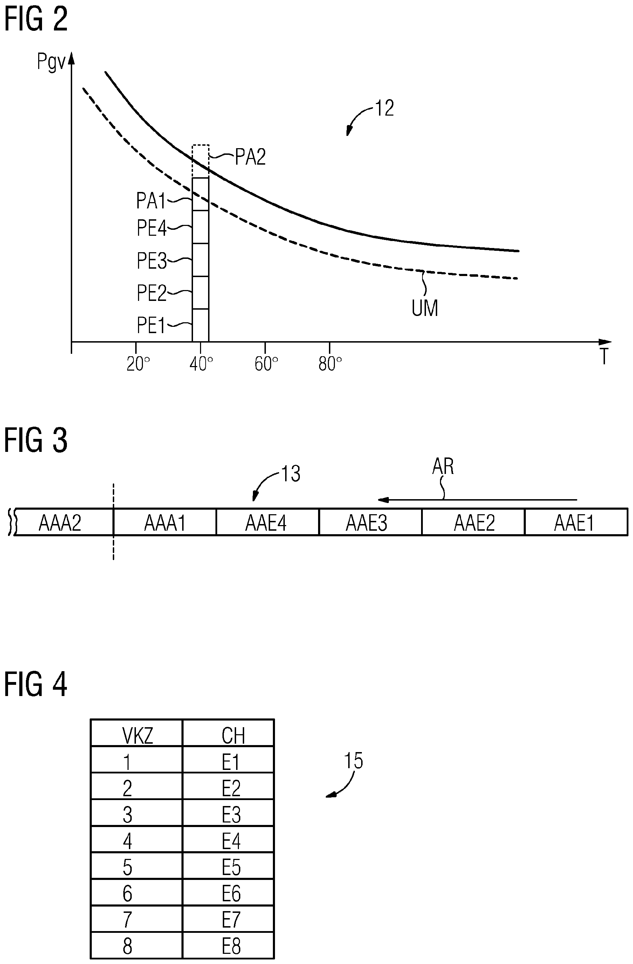

In dem Peripheriemodul 10 ist ein Speicherbereich 11 angeordnet, in welchem eine maximale Anzahl N von aktivierbaren Eingangskanälen E1,...,E4 und/oder Ausgangskanälen A1,...,A4 abgelegt ist. Die maximale Anzahl N wird derart vorgegeben, damit im Betrieb der Peripheriebaugruppe 10 eine zulässige Gesamt-Verlustleistung Pgv (siehe FIG 2) nicht überschritten wird. Eine Überwachungseinheit UE ist ausgestaltet, die aktivierten Eingangskanäle E1,...,E4 bzw. Ausgangskanäle A1,...,A4 zu überwachen damit die maximale Anzahl N von aktivierbaren Eingangskanälen E1,...,E4 und/oder Ausgangskanäle A1,...,A4 nicht überschritten wird.

Zusätzlich zu dem Speicherbereich 11 mit der maximalen Anzahl N ist eine Strombelastbarkeits-Kurve 12 (siehe FIG 2) abgelegt. Die Strombelastbarkeits-Kurve 12 gibt die zulässige Gesamt-Verlustleistung Pgv als Funktion einer Temperatur T wieder. Dabei ist die Überwachungseinheit UE ausgestaltet, die Summe der einzelnen Kanalverlustleistungen PE1,...,PE4, PA1,...,PA4 mit der Strombelastbarkeits-Kurve 12 zu vergleichen und die zur Verfügung stehenden Eingangskanäle E1,...,E4 und/oder Ausgangskanäle A1,...,A4 dahingehend zu steuern, dass bei Überschreiten der Strombelastbarkeits-Kurve 12 ein aktivierter Eingangskanal E1,...,E4 und/oder Ausgangskanal A1,...,A4 deaktivieret wird und bei einem vorgebbaren Unterschreitungsmaß UM ein deaktivierter Eingangskanal E1,...,E4 und/oder Ausgangskanal A1,...,A4 wiederum aktiviert werden kann.

Das in FIG 2 gezeigte Beispiel zeigt demnach die Strombelastbarkeit-Kurve 12 des Peripheriemoduls 10 und an der Stelle 40 °C für die Temperatur T ist eine Säule von Verlustleistungen eingezeichnet. Die Säule von Verlustleistungen bezeichnet die erste Verlustleistung PE1 des ersten Eingangskanals E1, die zweite Verlustleistung PE2 des zweiten Eingangskanals E1, die dritte Verlustleistung PE3 des dritten Eingangskanals E3, die vierte Verlustleistung PE4 des vierten Eingangskanals E4 und eine erste Verlustleistung PA1 des ersten Ausgangskanals A1. Nun ist die Summe der Verlustleistungen bereits nahe an dem Wert der Strombelastbarkeits-Kurve 12. Besteht nun der Wunsch den zweiten Ausgangskanal A2 zu aktivieren so wird dies von der Überwachungseinheit UE verweigert, da sonst die Summe der durch die einzelaktivierten Kanäle die Gesamtverlustleistung Pgv überschreiten würde.

Die Überwachungseinheit UE weist eine Warteschlange 13 (siehe FIG 3) auf, in welcher Kanalaktivierungsaufträge AAE1,...,AAE4 hinterlegt sind. Dabei ist die Überwachungseinheit UE ausgestaltet, die sich in der Warteschlange 13 befindenden Kanalaktivierungsaufträge AAE1,...,AAE4 abzuarbeiten und wenn es die aktuell herrschende Summe der einzelnen Kanalverlustleistungen PEi,PAi zulässt entsprechend dem jeweiligen Kanalaktivierungsauftrag den jeweiligen Eingangskanal E1,...,E4 und/oder Ausgangskanal A1,...,A4 zu aktivieren.

Vorteilhafterweise ist über die Schnittstelle 14 die maximale Anzahl N parametrierbar.

Die FIG 4 zeigt eine Prioritätsliste 15, welche ebenfalls in der Überwachungseinheit UE implementiert ist. In der Prioritätsliste 15 ist hinterlegt, welchen Eingangskanal E1,...,E4 bzw. bestimmten Ausgangskanal A1,...,A4 eine Vorrangs-Kennziffer VKZ zugeordnet ist. In der Spalte CH für Kanal befinden sich die Kanalbezeichner E1 bis A4 und in der Spalte VKZ Vorgangs-Kennziffer befinden sich die zugehörigen Prioritäten, wobei 1 die höchste Priorität ist und 8 die niedrigste.

Demnach ist die Überwachungseinheit UE in dem Peripheriemodul 10 gemäß FIG 1 ausgestaltet, denjenigen Eingangskanal E1,...,E4 und/oder Ausgangskanal A1,...,A4 gemäß seiner Vorrangs-Kennziffer VKZ mit Vorrang zu aktivieren.

Das Peripheriemodul 10 weist weiterhin eine Temperaturmesseinheit TME auf, welche einen Temperaturwert TW der Überwachungseinheit UE zur Verfügung stellt, wobei die Überwachungseinheit UE ausgestaltet ist, in Abhängigkeit von dem Temperaturwert TW die maximale Anzahl N von aktivierbaren Eingangskanälen E1,...,E4 und/oder Ausgangskanälen A1,...,A4 entsprechend anzupassen.

Weiterhin ist in der Überwachungseinheit UE eine Diagnoseeinheit DE angeordnet, welche mit der Überwachungseinheit UE zusammenarbeitet und ausgestaltet ist, eine Diagnosemeldung DM abzusetzen, wenn Aktivierungsanfragen AA für Eingangskanäle E1,...,E4 und/oder Ausgangskanäle A1,...,A4 eines auf das Peripheriemodul 10 zugreifenden Steuerungsprogramm AW die maximale Anzahl N von aktivierbaren Eingangskanälen E1,...,E4 und/oder Ausgangskanäle A1,...,A4 überschreitet. Zweckmäßigerweise setzt das Peripheriemodul 10 dann die Diagnosemeldung DM für den Fall ab, wenn die durch das Anwenderprogramm AW zu aktivierende Kanalzahl höher ist als die gemäß Derating zulässige.

Ein weiteres Beispiel ist eine 8 Kanal DO (Digitalausgabe), wobei je 4 Kanäle in einem IC verbaut sind.

Also die Ausgangskanäle A1,...,A4 in einem ersten IC und weitere Ausgangskanälen A5 bis A8 (nicht dargestellt) in einem zweiten IC untergebracht sind.

In jedem IC können dann zwei Kanäle ohne Derating betrieben werden, welche dem Anwender immer und zu jeder Zeit zur Verfügung stehen. Die anderen 4 Kanäle können dann bei höherer Temperatur zwecks Derating "abgeworfen" werden.

Damit ist jeder IC für sich entlastet. Diese Unterteilung macht es dem Anwender einfacher, seinen Prozess zu implementieren. Bei den wichtigen 4 Kanälen muss man nicht mit dem Abschalten rechnen, die anderen 4 Kanäle werden für unwichtigere Aufgaben benutzt, bei denen man ein Abschalten tolerieren kann.

Die maximale Anzahl N von aktivierbaren Ausgangskanälen A1,...,A4 wäre dann vier pro IC und die Überwachungseinheit (UE) wird in Abhängigkeit von dem Temperaturwert TW die maximale Anzahl N von Ausgangskanälen auf zwei pro IC anpassen.

## Patentansprüche

1. Peripheriemodul (10) für ein Automatisierungsgerät (30) mit einer Mehrzahl von Eingangskanälen (E1,...,E4) und/oder Ausgangskanälen (A1,...,A4), wobei jedem Eingangskanal (E1,...,E4) ein Signaleingang (SE1,...,SE4) und jedem Ausgangskanal (A1,...,A4) ein Signalausgang (SA1,...,SA4) zugeordnet ist, wobei
ein jeweiliger Signaleingang (SE1,...,SE4) mit seinem Eingangskanal (E1,...,E4) zum Anschluss von Sensoren und
ein jeweiliger Signalausgang (SA1,...,SA4) mit seinem Ausgangskanal (A1,...,A4 zum Anschluss von Aktoren ausgestaltet ist,
wobei
den Eingangskanälen (E1,...,E4) eine Auswerteeinheit (AE) und den Ausgangskanälen (A1,...,A4) eine Gebereinheit (GE) zugeordnet ist,
wobei aufgrund von Stromfluss in einem aktivierten Eingangskanal (E1,...,E4) bzw. in einem aktivierten Ausgangskanal (A1,...,A4) jeweils eine Kanalverlustleistung (PEi,PAi) auftritt,
**gekennzeichnet durch**
einen Speicherbereich (11) in dem eine maximale Anzahl (N) von aktivierbaren Eingangskanälen (E1,...,E4) und/oder Ausgangskanälen (A1,...,A4) abgelegt ist, wobei
die maximale Anzahl (N) derart vorgegeben ist, damit im Betrieb eine zulässige Gesamt-Verlustleistung (Pgv) einer Summe der maximal gleichzeitig auftretenden einzelnen Kanalverlustleistungen (PEi,PAi) nicht überschritten wird,
eine Überwachungseinheit (UE), welche ausgestaltet ist das die maximale Anzahl (N) von aktivierbaren Eingangskanälen (E1,...,E4) und/oder Ausgangskanälen (A1,...,A4) nicht überschritten wird.

2. Peripheriemodul (10) nach Anspruch 1, wobei in dem Speicherbereich (11) zusätzlich zu oder an Stelle der maximalen Anzahl (N) eine Strombelastbarkeitskurve (12) abgelegt ist, welche die zulässige Gesamt-Verlustleistung (Pgv) als Funktion einer Temperatur (T) wiedergibt,
die Überwachungseinheit (UE) ist weiterhin ausgestaltet, die Summe der einzelnen Kanalverlustleistungen (PEi,PAi) mit der Strombelastbarkeitskurve (12) zu vergleichen und die zur Verfügung stehenden Eingangskanäle (E1,...,E4) und/oder Ausgangskanäle (A1,...,A4) dahingehend zu steuern, dass bei Überschreiten der Strombelastbarkeitskurve (12) ein aktivierter Eingangskanal (E1,...,E4) und/oder Ausgangskanal (A1,...,A4) deaktiviert wird und bei einem vorgebbaren Unterschreitungsmaß (UM) ein deaktivierter Eingangskanal (E1,...,E1) und/oder Ausgangskanal (A1,...,A4) aktiviert wird.

3. Peripheriemodul (10) nach Anspruch 1 oder 2, wobei eine Warteschlange (13) vorhanden ist, in welcher Kanalaktivierungsaufträge (AAE1,...,AAE4) hinterlegt sind und die Überwachungseinheit (UE) ausgestaltet ist die sich in der Warteschlange (13) befindenden Kanalaktivierungsaufträge (AAE1,...,AAE4) abzuarbeiten und wenn es die aktuell herrschende Summe der einzelnen Kanalverlustleistungen (PEi,PAi) zulässt entsprechend dem Kanalaktivierungsauftrag (AAE1,...,AAE4) den jeweiligen Eingangskanal (E1,...,E4) und/oder Ausgangskanal (A1,...,A4) zu aktivieren.

4. Peripheriemodul (10) nach einem der Ansprüche 1 bis 3, aufweisend eine Schnittstelle (14) über die die maximale Anzahl (N) parametrierbar ist.

5. Peripheriemodul (10) nach einem der Ansprüche 1 bis 4, wobei eine Prioritätsliste (15) hinterlegt ist, in welcher bestimmten Eingangskanälen (E1,...,E4) bzw. bestimmten Ausgangskanälen (A1,...,A4) eine Vorrangs-Kennziffer (VKZ) zugeordnet ist und die Überwachungseinheit (UE) ist weiterhin ausgestaltet, deaktivierte Eingangskanäle (E1,...,E4) und/oder Ausgangskanäle (A1,...,A4) gemäß ihrer Vorrangs-Kennziffer (VKZ) mit Vorrang zu aktivieren.

6. Peripheriemodul (10) nach einem der Ansprüche 1 bis 5, aufweisend eine Temperaturmesseinheit (TME), welche einen Temperaturwert (TW) zur Verfügung stellt, wobei die Überwachungseinheit (UE) ausgestaltet ist in Abhängigkeit von dem Temperaturwert (TW) die maximale Anzahl (N) von aktivierbaren Eingangskanälen (E1,...,E4) und/oder Ausgangskanälen (A1,...A4) entsprechend anzupassen.

7. Peripheriemodul (10) nach einem der Ansprüche 1 bis 6, aufweisend eine Diagnoseeinheit (DE), welche mit der Überwachungseinheit (UE) zusammenarbeitet, und ausgestaltet ist eine Diagnosemeldung (DM) abzusetzen, wenn Aktivierungsanfragen (AA) für Eingangskanäle (E1,...,E4) und/oder Ausgangskanäle (A1,...,A4) eines auf das Peripheriemodul (10) zugreifenden Steuerungsprogramms (AW) die maximale Anzahl (N) von aktivierbaren Eingangskanälen (E1,...,E4) und/oder Ausgangskanälen (A1,...,A4) überschreiten.
